# EUROPEAN PATENT APPLICATION

(11) **EP 3 062 432 A1**
(43) Date of publication of application: **31.08.2016**
(21) Application number: 14801369.1
(22) Date of filing: 16.06.2014
(51) Int. Cl.: H02M 3/02

(54) **DIRECT CURRENT POWER SOURCE AND METHOD OF OPERATION THEREOF**

(30) Priority: 22.10.2013 CN 201310499577
(71) Applicant: ZTE Corporation, Shenzhen, Guangdong 518057 (CN)
(72) Inventor: WANG, Linguo, Shenzhen Guangdong 518057 (CN)
(74) Representative: Deambrogi, Edgardo
(86) International application number: PCT/CN2014/079989
(87) International publication number: WO 2014/187424

(57) **Abstract**

Provided are a direct current power supply and an operation method of the direct current power supply, relating to the field of electronic circuits and capable of rapidly following changes in load current while maintaining relatively high power supply efficiency. The direct current power supply includes a controller and at least two switch mode power supply portions, wherein output ends of the at least two switch mode power supply portions are connected to one another, and the controller is respectively connected to each of the at least two switch mode power supply portions; the at least two switch mode power supply portions comprise a rapid switch mode power supply portion having a first output inductor and a high-efficiency switch mode power supply portion having a second output inductor, wherein the first output inductor has an inductance value smaller than that of the second output inductor; the controller is configured to control the at least two switch mode power supply portions in accordance with a rate of change of an output current, so that, when an absolute value of the rate of change of the output current is greater than a preset value, output voltage is provided through the rapid switch mode power supply portion, and when the absolute value of the rate of change of the output current is smaller than or equal to the preset value, output voltage is provided through the high-efficiency switch mode power supply portion.

## Description

### Technical Field

The present disclosure relates to the field of electronic circuit technologies, and in particular to a direct current power supply and an operation method of the direct current power supply.

### Background

Switch mode power supply occupies a leading position in power supplies of electronic devices for its advantages of high efficiency and small size, in particular in application scenarios in which relatively high power is required. With the rapid upgrade of some electronic devices, such as Central Processing Unit (CPU), Field-Programmable Gate Array (FPGA), the power supply thereof is required to have lower voltage, higher current, and higher dynamic change rate of current. The latest CPU provided by Intel has a dynamic change rate of current exceeding100A/us, which raises a new challenge towards the application of power supply.

For a traditional buck switch mode power supply, it is needed to filter a high-voltage switch power source signal into a stable low-voltage power signal by using a low-frequency filter and then output the low-voltage power signal. The low-frequency filter generally consists of a passive power inductor and a capacitor. The inductance value of the power inductor determines the rate of change of the current output by the switch mode power supply. A smaller inductance value can increase the current response speed of the switch mode power supply, but will bring relatively large ripple current, thereby increasing the loss of the switch tube and the inductor and reducing the efficiency of the power supply. A larger inductance value can improve the efficiency of the power supply, but will reduce the current response speed of the switch mode power supply.

At present, a main solution is to bear dynamic current by a large amount of output capacitors, so as to reduce the requirement of rapid current response speed for the inductor, which however leads to an over large size and a low reliability of the power supply. Apart from this, there is also a technical solution to connect a switch mode power supply and a liner power supply in parallel, in which the switch mode power supply works on relatively lower bandwidth while the liner power supply works on relatively higher bandwidth. When a large current change rate occurs, the liner power supply provides the main current, so as to improve the dynamic response speed of the entire power supply. However, due to the low efficiency of the linear regulator and the need of keeping static work in a stable state, the efficiency of the power supply is impacted.

### Summary

The embodiments of the present disclosure provide a direct current power supply and an operation method of the direct current power supply, which is capable of rapidly following changes in load current while maintaining relatively high power supply efficiency.

According to one aspect of the embodiments of the present disclosure, a direct current power supply is provided, including: a controller and at least two switch mode power supply portions, wherein output ends of the at least two switch mode power supply portions are connected to one another, and the controller is respectively connected to each of the at least two switch mode power supply portions; the at least two switch mode power supply portions include a rapid switch mode power supply portion having a first output inductor and a high-efficiency switch mode power supply portion having a second output inductor, wherein the first output inductor has an inductance value smaller than that of the second output inductor; the at least two switch mode power supply portions are configured to provide output voltage together under control of the controller; the controller is configured to control the at least two switch mode power supply portions in accordance with a rate of change of output current, so that, when an absolute value of the rate of change of the output current is greater than a preset value, output voltage is provided through the rapid switch mode power supply portion, and when the absolute value of the rate of change of the output current is smaller than or equal to the preset value, output voltage is provided through the high-efficiency switch mode power supply portion.

Optionally, each of the at least two switch mode power supply portions may include: an output inductor, wherein one end of the output inductor is connected to an input power supply through a power switch and is grounded through a ground switch, while the other end of the output inductor is connected to an output capacitor; the controller may include: a detection unit, which is configured to detect the rate of change of the output current; a control unit, which is configured to control complementary and alternating closing or opening of the power switch and the ground switch of the rapid switch mode power supply portion according to Pulse Width Modulation (PWM) when the absolute value of the rate of change of the output current detected by the detection unit is greater than the preset value, or to control complementary and alternating closing or opening of the power switch and the ground switch of the high-efficiency switch mode power supply portion according to the PWM when the absolute value of the rate of change of the output current detected by the detection unit is smaller than or equal to the preset value.

Optionally, the control unit may be further configured to close the power switch of the high-efficiency switch mode power supply portion and open the ground switch of the high-efficiency switch mode power supply portion when the rate of change of the output current detected by the detection unit is positive and the absolute value is greater than the preset value; to open the power switch of the high-efficiency switch mode power supply portion and close the ground switch of the high-efficiency switch mode power supply portion when the rate of change of the output current detected by the detection unit is negative and the absolute value is greater than the preset value; to open both the power switch and the ground switch of the rapid switch mode power supply portion when the absolute value of the rate of change of the output current detected by the detection unit is smaller than the preset value.

Optionally, the PWM may include constant-on-time modulation or hysteresis modulation.

Optionally, a switch frequency of a power switch and a ground switch of the rapid switch mode power supply portion may be greater than a switch frequency of a power switch and a ground switch of the high-efficiency switch mode power supply portion.

Optionally, the switch frequency of the power switch and the ground switch of the rapid switch mode power supply portion may be over twice the switch frequency of the power switch and the ground switch of the high-efficiency switch mode power supply portion.

Optionally, the inductance value of the output inductor of the rapid switch mode power supply portion may be less than half the inductance value of the output inductor of the high-efficiency switch mode power supply portion.

Optionally, the inductance value of the output inductor of the rapid switch mode power supply portion may be a tenth of the inductance value of the output inductor of the high-efficiency switch mode power supply portion.

According to another aspect of the embodiments of the present disclosure, an operation method of the direct current power supply mentioned above is provided, including:
detecting a rate of change of an output current;
controlling the at least two switch mode power supply portions in accordance with the rate of change of the output current, so that, when an absolute value of the rate of change of the output current is greater than the preset value, output voltage is provided through the rapid switch mode power supply portion, and when the absolute value of the rate of change of the output current is smaller than or equal to the preset value, output voltage is provided through the high-efficiency switch mode power supply portion.

Optionally, controlling the at least two switch mode power supply portions in accordance with the rate of change of the output current, so that, when the absolute value of the rate of change of the output current is greater than the preset value, output voltage is provided through the rapid switch mode power supply portion, and when the absolute value of the rate of change of the output current is smaller than or equal to the preset value, output voltage is provided through the high-efficiency switch mode power supply portion may include: controlling complementary and alternating closing or opening of a power switch and a ground switch of the rapid switch mode power supply portion according to PWM when the absolute value of the rate of change of the output current detected by the detection unit is greater than the preset value, or controlling complementary and alternating closing or opening of a power switch and a ground switch of the high-efficiency switch mode power supply portion according to PWM when the absolute value of the rate of change of the output current detected by the detection unit is smaller than or equal to the preset value; wherein one end of the output inductor of each switch mode power supply portion is connected to an input power supply through the power switch and is grounded through the ground switch, while the other end of the output inductor is connected to an output capacitor.

Optionally, the method may further include: closing the power switch of the high-efficiency switch mode power supply portion and opening the ground switch of the high-efficiency switch mode power supply portion when the rate of change of the output current is positive and the absolute value is greater than the preset value; opening the power switch of the high-efficiency switch mode power supply portion and closing the ground switch of the high-efficiency switch mode power supply portion when the rate of change of the output current is negative and the absolute value is greater than the preset value; opening both the power switch and the ground switch of the rapid switch mode power supply portion when the absolute value of the rate of change of the output current unit is smaller than the preset value.

The direct current power supply and the operation method of the direct current power supply provided by the embodiments of the present disclosure can control each switch mode power supply portion according to a rate of change of an output current, so that, when the absolute value of the rate of change of the output current is greater than a preset value, the rapid switch mode power supply portion having a quicker dynamic response speed is used to provide output voltage, thereby making the output current rapidly follow the change of load current, and when the absolute value of the rate of change of the output current is smaller than or equal to the preset value, the high-efficiency switch mode power supply portion having a slower dynamic response speed but a higher efficiency is used to provide output voltage, thereby driving loads with a higher efficiency. By virtue of the technical solution, from the overall, the direct current power supply can rapidly follow changes in load current while maintaining a high power supply efficiency.

### Brief Description of the Drawings

Fig. 1 is a diagram showing a circuit structure of a direct current power supply provided by an embodiment of the present disclosure;
Fig. 2 is a diagram showing another circuit structure of a direct current power supply provided by an embodiment of the present disclosure;
Fig. 3 is a diagram showing a third circuit structure of a direct current power supply provided by an embodiment of the present disclosure; and
Fig. 4 is a diagram showing a flow of an operation method of a switch mode power supply provided by an embodiment of the present disclosure.

### Detailed Description

The example embodiments of the present disclosure are described below in further detail in conjunction with accompanying drawings. It should be understood that the specific example embodiment described below are only to illustrate but to limit the embodiments of the present disclosure.

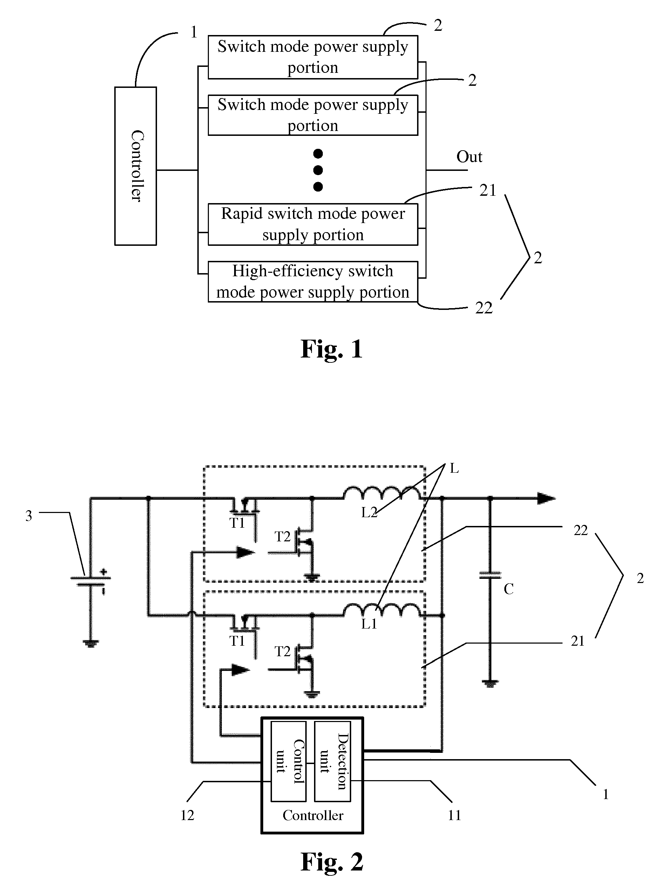

As shown in Fig. 1, an embodiment of the present disclosure provides a direct current power supply, including: a controller 1 and at least two switch mode power supply portions 2, wherein output ends of the at least two switch mode power supply portions 2 are connected to one another to form a common output end out, and the controller 1 is respectively connected to each of the at least two switch mode power supply portions 2; the at least two switch mode power supply portions 2 include a rapid switch mode power supply portion 21 having a first output inductor and a high-efficiency switch mode power supply portion 22 having a second output inductor, wherein the first output inductor has an inductance value smaller than that of the second output inductor. The at least two switch mode power supply portions 2 are configured to provide output voltage together under control of the controller 1; the controller 1 is configured to control the at least two switch mode power supply portions 2 in accordance with a rate of change of an output current, so that, when an absolute value of the rate of change of the output current is greater than a preset value, output voltage is provided through the rapid switch mode power supply portion 21, and when the absolute value of the rate of change of the output current is smaller than or equal to the preset value, output voltage is provided through the high-efficiency switch mode power supply portion 22.

The direct current power supply provided by the embodiment of the present disclosure may include multiple switch mode power supply portions 2, in which all the output inductances are not equal to one another. The controller 1 can control each switch mode power supply portion 2 according to the rate of change of the output current, so that, when the absolute value of the rate of change of the output current is greater than a preset value, the rapid switch mode power supply portion 21 having a quicker dynamic response speed is used to provide output voltage, thereby making the output current rapidly follow the change of load current; and when the absolute value of the rate of change of the output current is smaller than or equal to the preset value, the high-efficiency switch mode power supply portion 22 having a slower dynamic response speed but a higher efficiency is used to provide output voltage, thereby driving loads with a higher efficiency. In this way, from the overall, the direct current power supply provided by the embodiment of the present disclosure can rapidly follow changes in load current while maintaining relatively high power supply efficiency.

The inductance value of the output inductor determines the power supply efficiency of the switch mode power supply portion 2 and the response speed to the output current. Therefore, in this embodiment, the inductance value of the output inductor in the rapid switch mode power supply portion 21 is smaller, while the inductance value of the output inductor in the high-efficiency switch mode power supply portion 22 is larger. For example, the inductance value of the output inductor in the rapid switch mode power supply portion 21 may be less than half the inductance value of the output inductor in the high-efficiency switch mode power supply portion 22. As an example embodiment, the inductance value of the output inductor in the rapid switch mode power supply portion 21 may be a tenth of the inductance value of the output inductor in the high-efficiency switch mode power supply portion 22.

The switch mode power supply portion 2 maintains the output voltage stable by controlling the time ratio of closing to opening of switches. Specifically, a structure of the direct current power supply may be as shown in Fig. 2; each of the at least two switch mode power supply portions 2 includes: an output inductor L, wherein one end of the output inductor L is connected to an input power supply 3 through a power switch T1 and is grounded through a ground switch T2, while the other end of the output inductor L is connected to an output capacitor C. The controller 1 may include: a detection unit 11, which is configured to detect the rate of change of the output current; a control unit 12, which is configured to control complementary and alternating closing or opening of the power switch T1 and the ground switch T2 of the rapid switch mode power supply portion 21 according to PWM when the absolute value of the rate of change of the output current detected by the detection unit 11 is greater than the preset value, or to control complementary and alternating closing or opening of the power switch T1 and the ground switch T2 of the high-efficiency switch mode power supply portion 22 according to PWM when the absolute value of the rate of change of the output current detected by the detection unit 11 is smaller than or equal to the preset value.

It should be noted that the switch mode power supply portion 2 should provide a stable direct current voltage; therefore, the detection unit 11 collects the output current with the purpose of adjusting the switch mode power supply portion 2 accordingly, so as to make the output voltage on the output capacitor C stable. According to basic electrical knowledge, the change of voltage on the output capacitor C lags behind the change of current; therefore, the change of output voltage can be predicted based on the change of an output current, therefore, it is possible to learn the change tendency of output voltage in advance, thereby adjusting in time the output voltage to be changed. When the absolute value of the rate of change of the output current is greater than a preset value, it represents the output current changes quickly at this time, the rapid switch mode power supply portion 21 shall be used to provide voltage; when the absolute value of the rate of change of the output current is smaller than or equal to the preset value, it represents the output current changes slowly at this time, the high-efficiency switch mode power supply portion 21 shall be used to provide voltage.

Optionally, the power switch T1 and the ground switch T2 of the switch mode power supply portion 2 may be various switches having a closing or opening function, for example, transistor. By controlling the alternating closing and opening of these switches, the switch mode power supply portion 2 can chop the wave on the voltage output by the input power supply 3, that is, chop the direct current voltage output by the input power supply 3 into pulse voltage whose amplitude is equal the amplitude of the output voltage. The duty cycle of the pulse voltage can be adjusted by the controller 1; after the pulse voltage is subjected to the filtering of the output inductor L and the output capacitor C, direct current output voltage can be obtained on the output capacitor C.

In the above embodiment, the rapid switch mode power supply portion 21 or the high-efficiency switch mode power supply portion 22 can be selected, according to the rate of change of the output current, to output voltage. However, it should be noted that while one switch mode power supply portion 21 or 22 is used, the state of the other switch mode power supply portion 22 or 21 will exert a different influence on the stability of the output voltage.

In order to make the direct current power supply stabilize the output voltage more effectively in different conditions, optionally, besides controlling the alternating closing and opening of the power switch T1 and the ground switch T2 of some rapid switch mode power supply portions 2, the control unit 12 may be further configured to control the constant closing or opening of the power switch T1 and ground switch T2 of other switch mode power supplies 2. Specifically, when the rate of change of the output current detected by the detection unit 11 is positive and the absolute value is greater than the preset value, it represents the output voltage will increase at a large rate of change in a certain period of time; therefore, the control unit 12 may be further configured to control the power switch T1 of the high-efficiency switch power portion 22 to be closed and the ground switch T2 to be opened; in this way, the high-efficiency switch mode power supply 22 is in a charge state, that is, the input power supply 3 can keep charging the output capacitor C through the closed power switch T1. Through the collaboration of the rapid switch mode power supply portion 21 and the high-efficiency switch mode power supply 22, the current and voltage on the output capacitor C can follow rapidly along with the increase of current and voltage of loads.

Likewise, when the rate of change of the output current detected by the detection unit 11 is negative and the absolute value is greater than the preset value, it represents the output voltage will decrease at a large rate of change in a certain period of time. In order to make the output voltage on the output capacitor C decrease quickly, besides controlling the rapid switch mode power supply portion 21 to chop the wave on the output voltage from the input power supply 3 according to PWM, the control unit 12 may be further configured to control the power switch T1 of the high-efficiency switch mode power supply portion 22 to be opened and the ground switch T2 to be closed. In this way, the high-efficiency switch mode power supply 22 is in a discharge state, the output capacitor C can keep discharging through the closed ground switch T2 of the high-efficiency switch mode power supply 22. Through the collaboration of the rapid switch mode power supply portion 21 and the high-efficiency switch mode power supply 22, the current and voltage on the output capacitor C can follow rapidly along with the decrease of the current and voltage of loads.

When the absolute value of the rate of change of the output current detected by the detection unit 11 is smaller than the preset value, it represents the circuit is in a stable state. At this time, the response speed of the high-efficiency switch mode power supply portion 22 is enough to meet the change requirement of current and voltage of loads. Therefore, in order to make the switch mode power supply still maintain a high power supply efficiency, the control unit 12 may be further configured to control both the power switch and the ground switch of the rapid switch mode power supply portion 21 to be opened, so that the high-efficiency switch mode power supply portion 22 can chop the wave on the input power supply 3 according to PWM.

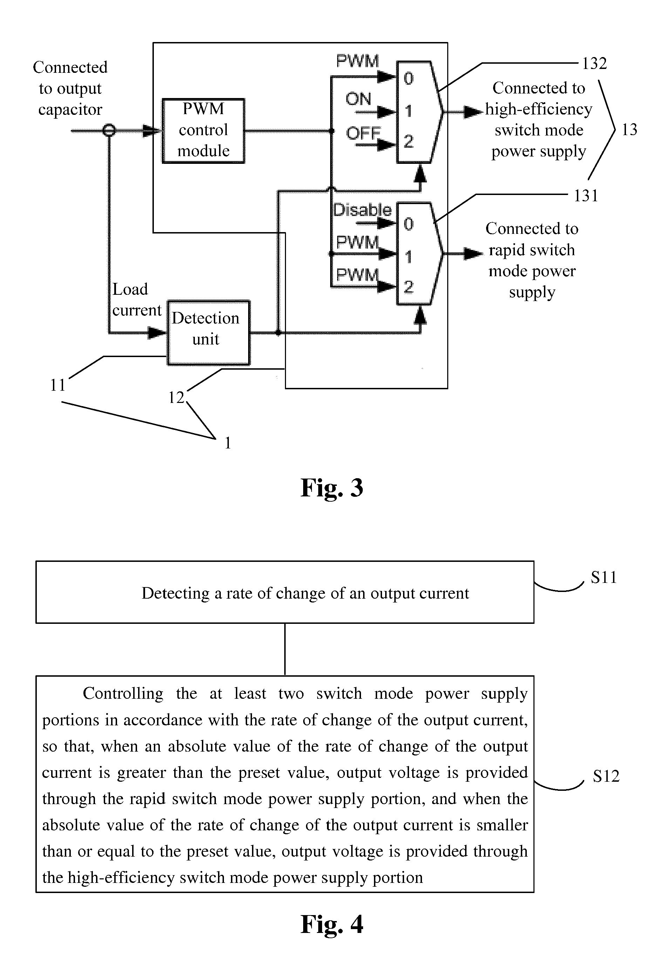

As an example only, one possible implementation of the controller 1 may be as shown in Fig. 3. Referring to Fig. 1 to Fig. 3, the control unit 12 may include multiple data selectors 13, each of which controls one switch mode power supply portion 2 correspondingly. The detection result of the detection unit 11 on the rate of change of the output current may serve as the selection criterion of each data selector 13; different state combinations about closing or opening of the power switch T1 and the ground switch T2 of each switch mode power supply portion 2 may serve as the spare input of the corresponding data selector 13. The output end of each data selector 13 is connected to the power switch T1 and the ground switch T2 of a corresponding switch mode power supply portion 2, so that the data selector 13 can select one combination from the several combinations to output according to the detection result of the detection unit 11, thereby controlling the corresponding switch mode power supply portion 2. Since each spare output is a combination of closing or opening of the power switch T1 and the ground switch T2, through the output selected from these different combinations to each switch mode power supply portion 2, the power switch T1 and the ground switch T2 of each switch mode power supply portion 2 can be controlled.

Optionally, when the detection unit 11 detects that the absolute value of the rate of change of the current on the output capacitor C is smaller than the preset value, it represents the circuit is in a stable state, then 0 is input to the criterion selection end of each data selector 13; when the detection unit 11 detects that the rate of change of the current on the output capacitor C is positive and the absolute value is greater than the preset value, it represents load current increases transiently, then 1 is input to the criterion selection end of each data selector 13; when the detection unit 11 detects that the rate of change of the current on the output capacitor C is negative and the absolute value is greater than the preset value, it represents load current decrease transiently, then 2 is input to the criterion selection end of each data selector 13.

Although the selection criterions of each data selector 13 may all include three different optional states, that is, 0, 1 and 2, each optional state corresponds to a different input channel; however, in the data selectors 13 corresponding to different switch mode power supply portions 2, signals loaded to input channels are different.

Optionally, in the spare input ends of the data selector 131 corresponding to the high-efficiency switch mode power supply portion 22, channel 0 corresponds to an input state of PWM, channel 1 corresponds to an input state of ON, that is, T1 is closed while T2 is opened, channel 2 corresponds to an input state of OFF, that is, T1 is opened while T2 is closed. While in the spare input ends of the data selector 131 corresponding to the rapid switch mode power supply portion 21, channel 0 corresponds to an input state of Disable, at this time, both T1 and T2 are opened, channel 1 and channel 2 both correspond to an input state of PWM. PWM specifically can be implemented by a special controller; optionally, PWM may include constant-on-time modulation or hysteresis modulation.

Although in the above embodiments the main difference between the rapid switch mode power supply portion 21 and the high-efficiency switch mode power supply portion 22 lies in a different inductance value of the output inductor, the embodiment of the present disclosure is not limited to this. For example, in other embodiments of the present disclosure, the difference between the rapid switch mode power supply portion 21 and the high-efficiency switch mode power supply portion 22 may also include a different switch frequency. A switch frequency of a power switch and a ground switch of the rapid switch mode power supply portion 21 is greater than a switch frequency of a power switch and a ground switch of the high-efficiency switch mode power supply portion 22, for example, the switch frequency of the power switch and the ground switch of the rapid switch mode power supply portion 21 may be over twice the switch frequency of the power switch and the ground switch of the high-efficiency switch mode power supply portion 22. In this way, the rapid switch mode power supply portion 21 can follow the change of load current more quickly, and the high-efficiency switch mode power supply portion 22 can use a lower switch frequency to further improve the power supply efficiency.

The work process of the direct current power supply provided by the embodiments of the present disclosure is described below by examples. In an embodiment of the present disclosure, supposing the rate of change of load current is 100A/us, the inductance value of the output inductor L1 of the rapid switch mode power supply portion 21 is 50nH, the switch frequency of T1 and T2 of the rapid switch mode power supply portion 21 is 1.2MHz, the inductance value of the output inductor L2 of the high-efficiency switch mode power supply portion 22 is 5uH, and the switch frequency of T1 and T2 of the high-efficiency switch mode power supply portion 22 is 200kHz. When the load current changes transiently, the controller 1 controls the power switch and the ground switch of the rapid switch mode power supply portion 21 to close or open alternatively and complementarily according to PWM, then the output current can follow load current more quickly, so that the output capacitor C discharges less and the output voltage changes less. Meanwhile, the controller 1 also makes the high-efficiency switch mode power supply portion 22 be in an ON state; since the inductance of the output inductor L2 is relatively large, the output current changes slowly, and the output current can follow up the load current later. During the entire dynamic process of the output current following the load current, the output current provided by the rapid switch mode power supply portion 21 has a step jump, then as the increase of the output current provided by the high-efficiency switch mode power supply portion 22, the output current provided by the rapid switch mode power supply portion 21 decreases gradually, so as to make the output current of the output capacitor C relatively stable. When the current provided by the high-efficiency switch mode power supply portion 22 follows up the load current, the dynamic process of the circuit is ended. At this time, the controller 1 controls the high-efficiency switch mode power supply portion 22 to work according to PWM, and controls the rapid switch mode power supply portion 21 to be disconnected with and the input power supply 3 and the output capacitor C, so as to make the direct current power supply maintain a high power supply efficiency in a stable state.

Correspondingly, as shown in Fig. 4, another embodiment of the present disclosure provides an operation method of the switch mode power supply described in the above embodiment, the operation method including:
S11: detecting a rate of change of an output current.
S12: controlling the at least two switch mode power supply portions in accordance with the rate of change of the output current, so that, when an absolute value of the rate of change of the output current is greater than the preset value, output voltage is provided through the rapid switch mode power supply portion, and when the absolute value of the rate of change of the output current is smaller than or equal to the preset value, output voltage is provided through the high-efficiency switch mode power supply portion.

The operation method of the direct current power supply provided by the embodiment of the present disclosure can control each switch mode power supply portion according to a rate of change of an output current, so that, when the absolute value of the rate of change of the output current is greater than a preset value, the rapid switch mode power supply portion having a quicker dynamic response speed is used to provide output voltage, thereby making the output current rapidly follow the change of load current; and when the absolute value of the rate of change of the output current is smaller than or equal to the preset value, the high-efficiency switch mode power supply portion having a slower dynamic response speed but a higher efficiency is used to provide output voltage, thereby driving loads with a higher efficiency. By virtue of the technical solution, from the overall, the direct current power supply can rapidly follow changes in load current while maintaining a high power supply efficiency.

Specifically, controlling the at least two switch mode power supply portions in accordance with the rate of change of the output current, so that, when the absolute value of the rate of change of the output current is greater than the preset value, output voltage is provided through the rapid switch mode power supply portion, and when the absolute value of the rate of change of the output current is smaller than or equal to the preset value, output voltage is provided through the high-efficiency switch mode power supply portion may include:
controlling complementary and alternating closing or opening of a power switch and a ground switch of the rapid switch mode power supply portion according to PWM when the absolute value of the rate of change of the output current detected by the detection unit is greater than the preset value, or controlling complementary and alternating closing or opening of a power switch and a ground switch of the high-efficiency switch mode power supply portion according to PWM when the absolute value of the rate of change of the output current detected by the detection unit is smaller than or equal to the preset value; wherein one end of the output inductor of each switch mode power supply portion is connected to an input power supply through the power switch and is grounded through the ground switch, while the other end of the output inductor is connected to an output capacitor.

Further, after S11, the method may further include: closing the power switch of the high-efficiency switch mode power supply portion and opening the ground switch of the high-efficiency switch mode power supply portion when the rate of change of the output current is positive and the absolute value is greater than the preset value; opening the power switch of the high-efficiency switch mode power supply portion and closing the ground switch of the high-efficiency switch mode power supply portion when the rate of change of the output current is negative and the absolute value is greater than the preset value; opening both the power switch and the ground switch of the rapid switch mode power supply portion when the absolute value of the rate of change of the output current unit is smaller than the preset value.

The detailed working principle of the switch mode power supply has been described in the previous embodiments, and no further description is needed here.

Although for the purpose of example, example embodiments of the embodiment of the present disclosure have been disclosed. Those skilled in the art shall realize that various improvements, increments and substitutes are possible. Therefore, the scope of the embodiment of the present disclosure shall not be limited to the above embodiments.

### Industrial Applicability

The embodiments of the present disclosure are applicable to the technical field of electronic circuits, can control each switch mode power supply portion according to a rate of change of an output current, so that, when the absolute value of the rate of change of the output current is greater than a preset value, the rapid switch mode power supply portion having a quicker dynamic response speed is used to provide output voltage, thereby making the output current rapidly follow the change of load current, and when the absolute value of the rate of change of the output current is smaller than or equal to the preset value, the high-efficiency switch mode power supply portion having a slower dynamic response speed but a higher efficiency is used to provide output voltage, thereby driving loads with a higher efficiency; therefore, from the overall, the direct current power supply can rapidly follow changes in load current while maintaining a high power supply efficiency.

## Claims

1. A direct current power supply, comprising: a controller and at least two switch mode power supply portions, wherein output ends of the at least two switch mode power supply portions are connected to one another, and the controller is respectively connected to each of the at least two switch mode power supply portions; the at least two switch mode power supply portions comprise a rapid switch mode power supply portion having a first output inductor and a high-efficiency switch mode power supply portion having a second output inductor, wherein the first output inductor has an inductance value smaller than that of the second output inductor;
the at least two switch mode power supply portions are configured to provide output voltage together under control of the controller; the controller is configured to control the at least two switch mode power supply portions in accordance with a rate of change of an output current, so that, when an absolute value of the rate of change of the output current is greater than a preset value, output voltage is provided through the rapid switch mode power supply portion, and when the absolute value of the rate of change of the output current is smaller than or equal to the preset value, output voltage is provided through the high-efficiency switch mode power supply portion.

2. The direct current power supply as claimed in claim 1, wherein
each of the at least two switch mode power supply portions comprises: an output inductor, wherein one end of the output inductor is connected to an input power supply through a power switch and is grounded through a ground switch, while the other end of the output inductor is connected to an output capacitor;
the controller comprises:
a detection unit, which is configured to detect the rate of change of the output current;
a control unit, which is configured to control complementary and alternating closing or opening of the power switch and the ground switch of the rapid switch mode power supply portion according to Pulse Width Modulation, PWM, when the absolute value of the rate of change of the output current detected by the detection unit is greater than the preset value, or to control complementary and alternating closing or opening of the power switch and the ground switch of the high-efficiency switch mode power supply portion according to the PWM when the absolute value of the rate of change of the output current detected by the detection unit is smaller than or equal to the preset value.

3. The direct current power supply as claimed in claim 2, wherein the control unit is further configured to close the power switch of the high-efficiency switch mode power supply portion and open the ground switch of the high-efficiency switch mode power supply portion when the rate of change of the output current detected by the detection unit is positive and the absolute value is greater than the preset value; to open the power switch of the high-efficiency switch mode power supply portion and close the ground switch of the high-efficiency switch mode power supply portion when the rate of change of the output current detected by the detection unit is negative and the absolute value is greater than the preset value; to open both the power switch and the ground switch of the rapid switch mode power supply portion when the absolute value of the rate of change of the output current detected by the detection unit is smaller than the preset value.

4. The direct current power supply as claimed in claim 2, wherein the PWM comprises constant-on-time modulation or hysteresis modulation.

5. The direct current power supply as claimed in claim 1, wherein a switch frequency of a power switch and a ground switch of the rapid switch mode power supply portion is greater than a switch frequency of a power switch and a ground switch of the high-efficiency switch mode power supply portion.

6. The direct current power supply as claimed in claim 5, wherein the switch frequency of the power switch and the ground switch of the rapid switch mode power supply portion is over twice the switch frequency of the power switch and the ground switch of the high-efficiency switch mode power supply portion.

7. The direct current power supply as claimed in claim 1, wherein the inductance value of the output inductor of the rapid switch mode power supply portion is less than half the inductance value of the output inductor of the high-efficiency switch mode power supply portion.

8. The direct current power supply as claimed in claim 7, wherein the inductance value of the output inductor of the rapid switch mode power supply portion is a tenth of the inductance value of the output inductor of the high-efficiency switch mode power supply portion.

9. An operation method of a direct current power supply as claimed in any one of claims 1 to 8, the operation method comprising:
detecting a rate of change of an output current;
controlling the at least two switch mode power supply portions in accordance with the rate of change of the output current, so that, when an absolute value of the rate of change of the output current is greater than the preset value, output voltage is provided through the rapid switch mode power supply portion, and when the absolute value of the rate of change of the output current is smaller than or equal to the preset value, output voltage is provided through the high-efficiency switch mode power supply portion.

10. The operation method as claimed in claim 9, wherein controlling the at least two switch mode power supply portions in accordance with the rate of change of the output current, so that, when the absolute value of the rate of change of the output current is greater than the preset value, output voltage is provided through the rapid switch mode power supply portion, and when the absolute value of the rate of change of the output current is smaller than or equal to the preset value, output voltage is provided through the high-efficiency switch mode power supply portion comprises:
controlling complementary and alternating closing or opening of a power switch and a ground switch of the rapid switch mode power supply portion according to Pulse Width Modulation, PWM, when the absolute value of the rate of change of the output current detected by the detection unit is greater than the preset value, or controlling complementary and alternating closing or opening of a power switch and a ground switch of the high-efficiency switch mode power supply portion according to PWM when the absolute value of the rate of change of the output current detected by the detection unit is smaller than or equal to the preset value;
wherein one end of the output inductor of each switch mode power supply portion is connected to an input power supply through the power switch and is grounded through the ground switch, while the other end of the output inductor is connected to an output capacitor.

11. The operation method as claimed in claim 10, further comprising:
closing the power switch of the high-efficiency switch mode power supply portion and opening the ground switch of the high-efficiency switch mode power supply portion when the rate of change of the output current is positive and the absolute value is greater than the preset value; opening the power switch of the high-efficiency switch mode power supply portion and closing the ground switch of the high-efficiency switch mode power supply portion when the rate of change of the output current is negative and the absolute value is greater than the preset value; opening both the power switch and the ground switch of the rapid switch mode power supply portion when the absolute value of the rate of change of the output current unit is smaller than the preset value.
